# EUROPÄISCHE PATENTANMELDUNG

(11) **EP 0 787 738 A1**
(43) Veröffentlichungstag der Anmeldung: **06.08.1997**
(21) Anmeldenummer: 97100587.1
(22) Anmeldetag: 16.01.1997
(51) Int. Cl.: C07F 9/6571

(54) **Verfahren zur Herstellung von 6-Alkoxy-(6H)-dibenz[c, e][1,2]-oxaphosphorinen**

(30) Priorität: 01.02.1996 DE 19603570
(71) Anmelder: HOECHST AKTIENGESELLSCHAFT, 65929 Frankfurt am Main (DE)
(72) Erfinder: Kleiner, Hans-Jerg, Dr., 61476 Kronberg (DE)

(57) **Zusammenfassung**

Die Erfindung betrifft ein Verfahren zur Herstellung von 6-Alkoxy-(6H)-dibenz[c,e][1,2]-oxaphosphorinen der Formel (I) 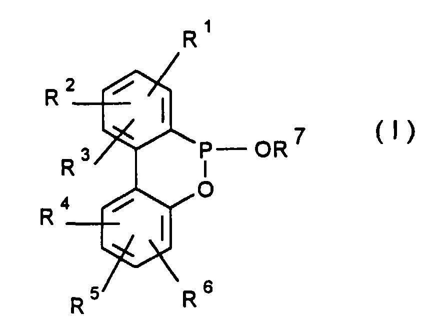 worin R¹bis R⁶ unabhängig voneinander Halogen, (C₁-C₆)Alkyl oder (C₁-C₆)Alkoxy bedeuten und R⁷ für (C₁-C₈)Alkyl steht, dadurch gekennzeichnet, daß man 6-Halogen-(6H)-dibenz[c,e][1,2]-oxaphosphorine der Formel (II) 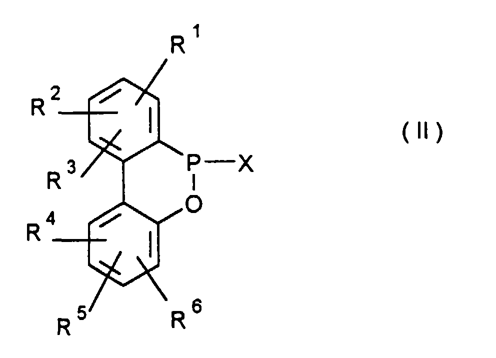 worin R¹ bis R⁶ die oben angegebene Bedeutung haben und X Halogen bedeutet, bei Temperaturen von -30 bis +5°C in Alkohole R⁷OH, worin R⁷ die oben angeführte Bedeutung besitzt, eindosiert und anschließend bei dieser Temperatur Ammoniak einleitet.

## Beschreibung

Die Erfindung betrifft ein Verfahren zur Herstellung von 6-Alkoxy-(6H)-dibenz[c,e][1,2]-oxaphosphorinen.

6-Alkoxy-(6H)-dibenz[c,e][1,2]-oxaphosphorine sind wertvolle Zusatzmittel zur Erhöhung der thermischen Stabilität von aliphatischen Polycarbonaten (EP-PS 0 292 786). Der Zusatz bei der Herstellung von Polyestern vermindert deren Verfärbungstendenz und erhöht die Hydrolysebeständigkkeit (Japan. Kokai 7856250). Sie sind weiterhin wertvolle Zwischenprodukte zur Herstellung von Photoinitiatoren (EP-OS 0 304 782).

Ihre Herstellung erfolgte bisher durch Umsetzung von 6-Chlor-(6H)-dibenz[c,e](1,2]-oxaphosphorin mit Alkoholen in Gegenwart tertiärer Basen wie z.B. Pyridin mit Hilfe geeigneter Lösungsmittel (E.A. Chernyshev et al., Zh. Obshch Khim. 42, 93 (1972)). Hierfür ist lediglich eine Ausbeute 54 % d.Th. beschrieben.

Es bestand daher der Bedarf, ein Verfahren zur Herstellung der 6-Alkoxy-(6H)-dibenz[c,e][1,2]-oxaphosphorine zu entwickeln, das ohne großen technischen Aufwand die gewünschten Produkte in hoher Ausbeute und Reinheit liefert.

Diese Aufgabe wird gelöst durch ein Verfahren zur Herstellung von 6-Alkoxy-(6H)-dibenz[c,e][1,2]-oxaphosphorinen der Formel (I) 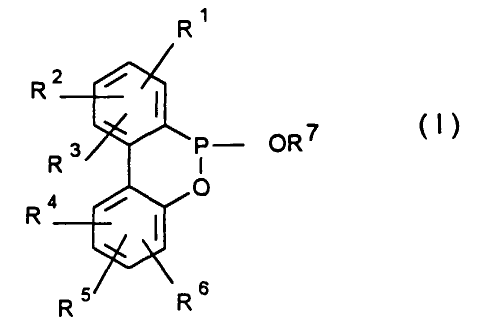 worin R¹ bis R⁶ unabhängig voneinander Halogen, (C₁-C₆)Alkyl oder (C₁-C₆)-Alkoxy bedeuten und R⁷ für (C₁-C₈)Alkyl steht, dadurch gekennzeichnet, daß man 6-Halogen-(6H)-dibenz[c,e][1,2]-oxaphosphorine der Formel (II) 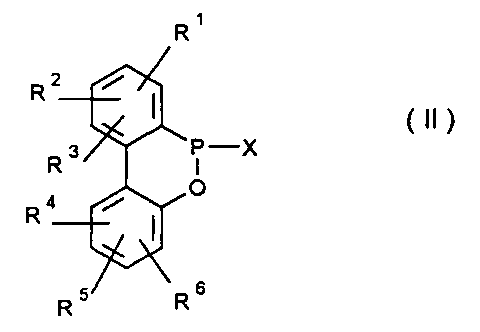 worin R¹ bis R⁶ die oben angegebene Bedeutung haben und X Halogen bedeutet, bei Temperaturen von -30 bis +5°C in Alkohole R⁷OH, worin R⁷ die oben angeführte Bedeutung besitzt, eindosiert und anschließend bei dieser Temperatur Ammoniak einleitet.

Wichtig ist das Verfahren z.B. zur Herstellung von Verbindungen der Formel (I), worin jeweils einer, insbesondere zwei der Reste R¹ bis R³ und R⁴ bis R⁶ Wasserstoff sind und R⁷ (C₁-C₄)Alkyl bedeutet. Auch für die unsubstituierten Verbindungen mit R¹ bis R⁶ gleich Wasserstoff ist die Reaktion von großer Bedeutung.

Als Alkohole R⁷OH kommen z.B. Methanol, Ethanol, Isopropanol, Butanol oder Oktanol in Frage. Insbesondere Ethanol ist bevorzugt. Die Alkohole sollen möglichst frei von Wasser sein.Es hat sich in vielen Fällen bewährt, Alkohole im Überschuß einzusetzen; hierbei hat sich insbesondere ein Überschuß von Chloroxaphosphorinen zu: Alkohol von 1:1,1 bis 1:20, bevorzugt 1:1,1 bis 1:1,15 Mol als günstig erwiesen.

Zusätzlich ist der Einsatz inerter Lösungsmittel wie z.B. Toluol oder Cyclohexan zweckmäßig.

Das Verfahren wird vorteilhaft so durchgeführt, daß in den Alkohol, gegebenenfalls vermischt mit dem Lösungsmittel, unter Stickstoffatmosphäre das Chloroxaphosphorin bei -30°C bis 0°C, insbesondere -20 bis -10°C, eindosiert wird und anschließend der gebildete Halogenwasserstoff mit Ammoniak umgesetzt wird.

Gute Ergebnisse werden z.B. erzielt, wenn das Eindosieren des Chloroxaphosphorins etwa eine bis zwei Stunden beträgt und die Umsetzung des Ammoniaks ebenfalls in ein bis zwei Stunden beendet ist. Der Ammoniak wird zweckmäßig im Überschuß von 10 bis 30 Mol% eingesetzt, um sicherzustellen, daß das Reaktionsgut im alkalischen Bereich verbleibt. Nach beendeter Umsetzung wird zweckmäßig bei Raumtemperatur nachgerührt, dann vom gebildeten Ammoniumchlorid abgesaugt. Das Filtrat wird in üblicher Weise destillativ aufgearbeitet. Das Verfahren kann auch kontinuierlich durchgeführt werden. Für bestimmte Einsatzgebiete fallen die verfahrensgemäß hergestellten Ester bereits als Rohprodukte so rein an, daß eine destillative Reinigung unterbleiben kann.

### Beispiel 1

300 g (1,28 Mol) 6-Chlor-(6H)-dibenz[c,e][1,2]-oxaphosphorin, gelöst in 346 ml Toluol, werden unter Rühren während 1,5 Stunden in eine Mischung aus 76,5 (1,663 Mol) absolutes Ethanol und 807 ml Toluol bei -15 bis -20°C eingetropft. Anschließend werden 23 g (1,35 Mol) Ammoniak bei dieser Temperatur schnell eingeleitet. Dann wird nachgerührt und abgesaugt sowie mit Toluol nachgespült. Das Filtrat wird bei 12 mbar bis zu einer Innentemperatur von 75°C destillativ eingeenget, zum Schluß bei 1 mbar. Man erhält 300 g 6-Ethoxy-(6H)-dibenz[c,e][1,2]oxaphosphorin als erstarrte Schmelze. Erstarrungspunkt: 45-55°C. Nach der 31-P-NMR-Messung ist das Produkt ca. 95%ig. Die Ausbeute beträgt 96 % der Theorie.

### Beispiel 2

Zu 350 g (7,6 Mol) absolutem Ethanol werden unter Rühren bei -15°C und unter Stickstoffatmosphäre 121,6 g (0,519 Mol) 6-Chlor-(6H)-dibenz[c,e][1,2]-oxaphosphorin, gelöst in 141 mol Toluol, während 90 Minuten eingetropft. Dann werden 9 g (0.53 Mol) Ammoniak bei -15 bis -10°C unter Rühren schnell eingeleitet. Nach dem Nachrühren wird auf 50°C erwärmt, eine Stunde bei dieser Temperatur gehalten und dann abgesaugt und mit Toluol nachgespült. Das Filtrat wird bei 12 mbar bis zu einer Innentemperatur von 85°C eingeengt, der Rückstand wird bei dieser Temperatur von Salzmengen durch Filtration über eine Fritte befreit. Das Filtrat wird bei 1,2 mbar destilliert. Man erhält bei einer Übergangstemperatur von 161-163°C 110 g. Das entspricht einer Ausbeute von 87 % der Theorie.

## Patentansprüche

1. Verfahren zur Herstellung von 6-Alkoxy-(6H)-dibenz[c,e][1,2]-oxaphosphorinen der Formel (I) 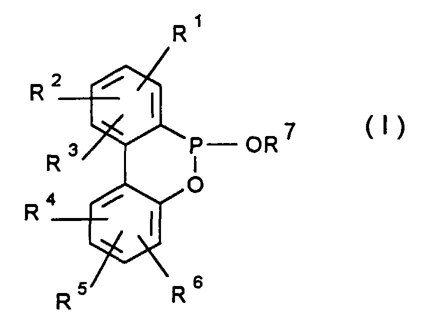 worin R¹bis R⁶ unabhängig voneinander Halogen, (C₁-C₆)Alkyl oder (C₁-C₆)-Alkoxy bedeuten und R⁷ für (C₁-C₈)Alkyl steht, dadurch gekennzeichnet, daß man 6-Halogen-(6H)-dibenz[c,e][1,2]-oxaphosphorine der Formel (II) 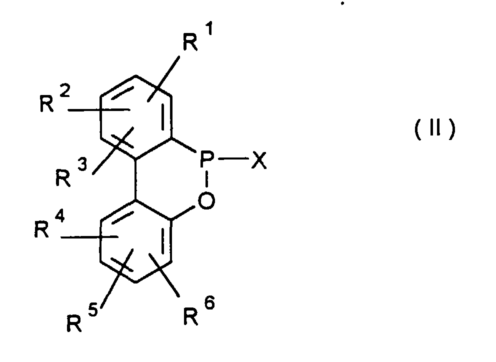 worin R¹ bis R⁶ die oben angegebene Bedeutung haben und X Halogen bedeutet, bei Temperaturen von -30 bis +5°C in Alkohole R⁷OH, worin R⁷ die oben angeführte Bedeutung besitzt, eindosiert und anschließend bei dieser Temperatur Ammoniak einleitet.

2. Verfahren nach Anspruch 1, dadurch gekennzeichnet, daß jeweils einer, insbesondere zwei der Reste R¹ bis R³ und R⁴ bis R⁶ Wasserstoff sind und R⁷ (C₁-C₄)Alkyl bedeutet.

3. Verfahren nach Anspruch 1 oder 2, dadurch gekennzeichnet, daß R¹ bis R⁶ Wasserstoff sind.

4. Verfahren nach Anspruch 1 bis 3, dadurch gekennzeichnet, daß als Alkohole R⁷OH Methanol, Ethanol, Isopropanol, Butanol oder Oktanol, insbesondere Ethanol eingesetzt wird.

5. Verfahren nach Anspruch 1 bis 4, dadurch gekennzeichnet, daß derAlkohol im Überschuß zu Chloroxaphosphorin eingesetzt wird, insbesondere im Überschuß von 1:1,1 bis 1:20, bevorzugt im Überschuß von 1:1,15 bis 1:15 Mol.

6. Verfahren nach Anspruch 1 bis 5, dadurch gekennzeichnet, daß zusätzlichein inertes Lösungsmittel, insbesondere Toluol oder Cyclohexan eingesetzt wird.

7. Verfahren nach Anspruch 1 bis 6, dadurch gekennzeichnet, daß das Chloroxaphosphorin bei -30°C bis 0°C, insbesondere -20°C bis -10°C unter Stickstoffatmosphäre in den Alkohol eindosiert wird.

8. Verfahren nach Anspruch 1 bis 7, dadurch gekennzeichnet, daß der Ammoniak im Überschuß von 10 bis 30 Mol% eingesetzt wird.

9. Verfahren nach Anspruch 1 bis 8, dadurch gekennzeichnet, daß die Eindosierzeit und Reaktionszeit mit Ammoniak jeweils 1 bis 2 Stunden beträgt.
